Europäisches Patentamt

European Patent Office

Office européen des brevets

(11) Publication number: **0 344 829**

**A2**

# EUROPEAN PATENT APPLICATION

(21) Application number: 89201109.9

(51) Int. Cl.⁴: **G11B 33/04 , B65D 85/57**

(22) Date of filing: 01.05.89

(30) Priority: 04.05.88 NL 8801166

(43) Date of publication of application:
**06.12.89 Bulletin 89/49**

(84) Designated Contracting States:
**AT BE CH DE ES FR GB GR IT LI LU NL SE**

(71) Applicant: **DIELCO PLASTIC INDUSTRIE B.V.**
**Bisschop Bekkerslaan 8a**
**NL-5628 RA Eindhoven(NL)**

(72) Inventor: **Janssen, Antonius Johannes Maria**
**Herteweide 28**
**NL-5467 LE Veghel(NL)**

(74) Representative: **Noz, Franciscus Xaverius, Ir.**
**et al**
**Algemeen Octrooibureau P.O. Box 645**
**NL-5600 AP Eindhoven(NL)**

(54) **Housing for disc-shaped registration mediums.**

(57) Housing for disc-shaped registration mediums, more in particular CD singles. The housing is. provided with a holder having two holder halves, which are pivotally connected in parallel planes relative to each other. One main surface of one of the holder halves thereby forms a carrier for accommodating a registration disc. The holder halves may be provided with a snap.

FIG. 1.

FIG. 5.

Xerox Copy Centre

## Housing for disc-shaped registration mediums.

The invention relates to a housing for disc-shaped registration mediums, said housing comprising a holder having two holder halves which are movable relative to each other, and a carrier for accommodating a registration disc.

The invention is in particular aimed at a housing for CDs, and specifically at CD singles having a diameter of 80 mm, instead of the 120 mm of the conventional CD. In the general the invention is not limited to a housing for CDs, however. It may just as well be applied with other optical registration discs, such as videodiscs, which of course contain sound, and different registration mediums, such as disc-shaped magnetic registration mediums, in contrast to disc-shaped optical registration mediums. The discs do not necessarily have to be circular thereby, but they may also be rectangular, in particular square.

Hereinafter, for the sake of simplicity of the description, we will depart from a conventional CD box, the so-called "Jewel Box", when describing conventional art. This known housing substantially consists of three parts, namely two holder halves and one carrier for the CD. The holder halves are pivotally connected in such a manner that the box-shaped housing can be stored as a book, as it were. The carrier fits one of the holder halves and is provided with a circular lowering, in which a CD can be accommodated. In the centre of the carrier there are provided clamping means for engagement with the central circular opening in the CD, in order to hold it such that the CD maintains its position in the circular lowering, preferably also when the carrier is held upside down. Removing the CD from the carrier is done by pressing the spring means with the index finger, as a result of which the CD is released and the index finger slides into the opening in the CD, after which the CD will be supported by the thumb at its outer edge and can be removed from the carrier by means of the index finger and the thumb and be placed in a CD player.

In the holder half serving as a receiving means for the carrier textual information is provided, in the shape of a supplementary sheet which is kept in its correct position as soon as the carrier has been provided in said holder half. The other holder half is provided with means for accommodating one or more sheets provided with printed information, usually in the shape of a booklet. The holder halves are transparent, of course.

The housing just described has several disadvantages, a few of which will be summed up hereafter. Since the known housing consists of three parts it is costly. Besides, the housing cannot be opened with one hand, and it is difficult to fill it, seal it and provide it with printed information by means of an automated process. Finally, this known housing is not really suitable for CDs having a diameter of 80 mm, as a result of which material is wasted.

The object of the invention is to eliminate the disadvantages of the known housing, and this objective is accomplished by a device of the kind referred to in the preamble, which is characterized in that the holder halves are pivotally connected in parallel planes relative to each other, and that the carrier is formed by one main surface of one of the holder halves.

The housing according to the invention is made in two parts, because one of the holder halves also serves as a carrier. Besides, the housing according to the invention is more suitable for smaller-size CDs because the housing preferably has a length more than one and a half times its width, instead of being substantially square, as is the case with the Jewel Box, as a result of which the housing according to the invention is sufficiently dimensioned, which is advantageous for the retailers, for example. Also it is possible to open the housing with one hand.

Further advantages of the invention will appear from the following description of an embodiment and details of its characteristics to be further discussed.

The invention will be further explained hereafter with reference to the drawing, in which:

fig 1 is a plan view of the lower holder half;

fig 2 is a section through fig 1 along the line II - II;

fig 3 is a section through fig 1 along the line III - III;

fig 4 is a section along the line IV - IV in fig 1;

fig 5 is a bottom view of the upper holder half;

fig 6 is a section along the line VI - VI in fig 5; and

fig 7 is a section along the line VII - VII in fig 5.

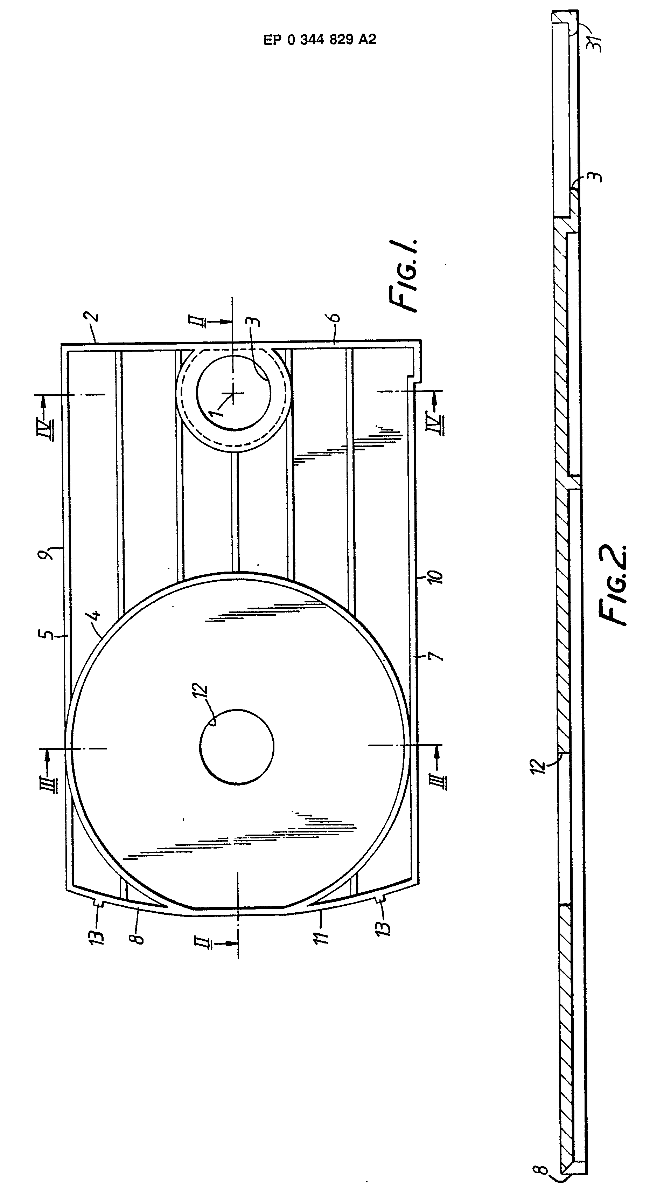

The figures 1, 5 and 6 of the drawing are on a scale of 1 : 1, the remaining figures are on a scale of 1 : 2, from which it appears that this embodiment is intended for use with CD singles.

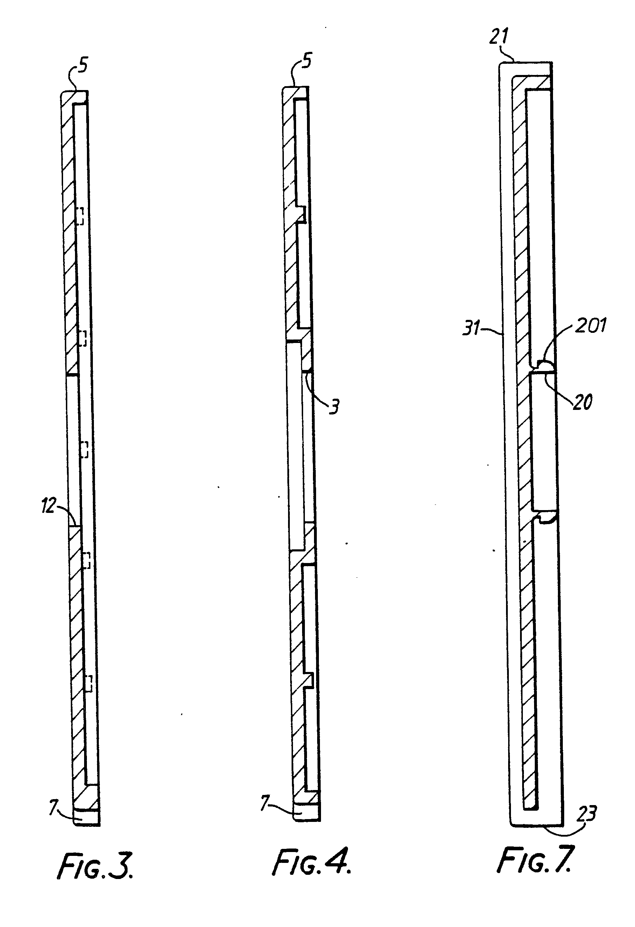

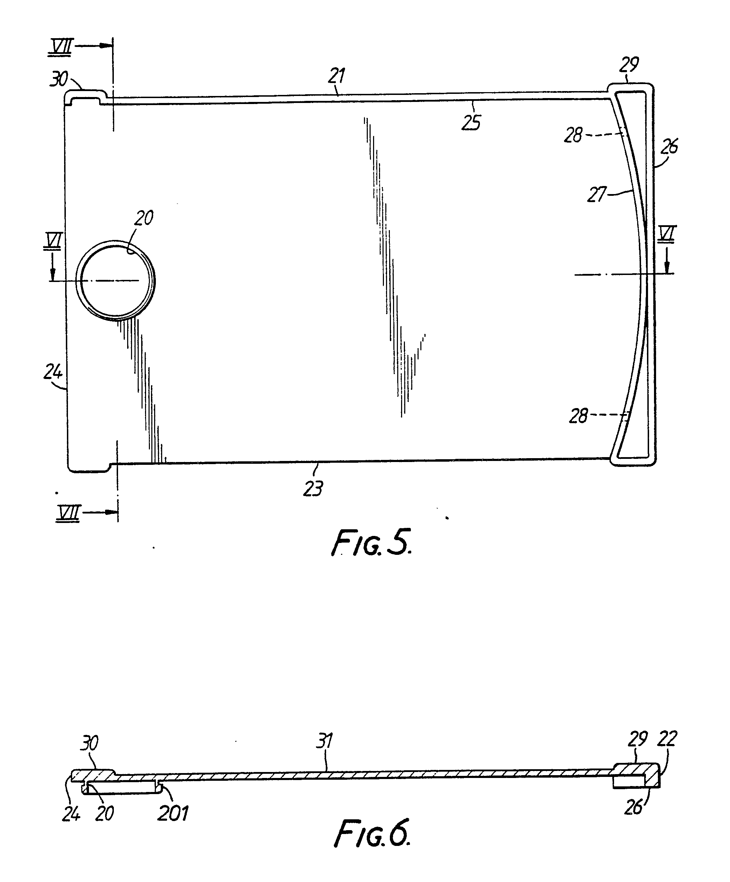

As already said, fig 1 is a plan view of the lower holder half of the CD single housing. The reference number 1 indicates a pivot point which is located halfway up the side 2 of the substantially rectangular lower holder half, spaced by a relatively small distance therefrom. The reference number 3 indicates a circular opening, which forms part of the pin joint between the lower holder half and the upper holder half illustrated in fig 5. Figs 2 and 3 provide further details as to the shape of the opening 3 in the lower holder half. The reference number 4 indicates an upright circular rib. In this embodiment the circular rib 4 touches the upright straight ribs 5 and 7 and the upright rib 8, substantially shaped like the arc of a circle, of the sides 9, 10 and 11, respectively, of the lower holder half. The upright, substantially circular rib 8 has a straight flattening near the point where it touches the upright circular rib 4, at which point both the circular rib 8 and the circular rib 4 are interrupted, as a result of which the CD single can be removed in the usual manner with the thumb and the index finger. The reference number 12 indicates a circular opening, whilst no spring means are present because, as will be seen later, the CD single cannot fall out of the housing when it is opened. The function of the circular opening 12, which has a wider diameter than the opening in a CD single, is that in sealed condition of the housing it can still be verified whether a CD single is present in the housing. The reference number 13 finally indicates a few protrusions on the circular arc rib 8 of the lower holder half.

As already said, fig 5 shows the bottom side of the upper holder half. The reference number 20 indicates an upright circular rib, whose centre point corresponds with the pivot point likewise indicated with the reference number 1 in fig 1. As is shown in figs 6 and 7, the circular rib is provided with a specially shaped flange 201 for engagement with the circular opening 3 in the lower holder half illustrated in fig 1, whereby the peripheral edge 31 has a corresponding shape, as is apparent from fig 2. By pressing the upper holder half on the lower holder half, with the pivot points 1 aligned, said holder halves will be connected together, such that the holder halves are pivotally connected in parallel planes relative to each other, whereby the circular rib 4 on the upper main surface of the lower holder half, in combination with the part of said main surface of said holder half enclosed thereby, forms the carrier for the CD single.

The snap joint shown in the figures of the drawing is only one of many possibilities, of course. In the present case the snap joint is such that the upper holder half cannot be taken out of the lower holder half. By another configuration of the flange 201 (fig 6) a snap joint which is removable may be accomplished. Furthermore the connection may be realised in a different manner by a screwed or bolted joint, a glued joint, a plugged joint which can be moulded by means of a hot moulding stamp, whereby the plug may possibly be loose, a clamped ring joint, such as by means of a star ring, a tacked joint, a blind riveted joint, a riveted joint, etc.

The upper holder half has upright straight ribs 25 and 26 on its lower main surface, at the sides 21 and 22, and in addition an upright circular arc rib 27 touching the side 22 and the centre of the straight rib 22, the arc of the circle of said circular arc rib 27 corresponding with that of the circular arc rib 8 of the lower holder half illustrated in fig 1. Besides, the corner of the lower holder half illustrated in fig 1, which is formed by the sides 2 and 9, may be bevelled or rounded.

The upright circular arc rib 27 is provided with two openings 28 for co-operation with the protrusions 13 on the upright circular arc rib 8 of the lower holder half shown in fig 1. Although there are two protrusions 13 and two openings 28, therefore, it will be apparent that only one protrusion 8 and one opening 28 might be sufficient. Besides, the openings and the protrusions may be exchanged, i.e. that the lower holder half is provided with openings and the upper holder half is is provided with protrusions. Also a lowering may be applied instead of a through hole, for example when only one protrusion is used.

On the one hand the rib 27 in fig 5 therefore serves to guide the lower holder half illustrated in fig 1, and also to lock the two holder half in the closed position of the holder. The rib 21 forms a stop for the lower holder half of fig 1 with a closed position of the housing. Moreover, the stop 21, in particular the part bounding the side 24, serves as a stop for the entirely opened position, as a result of which the pivoting distance remains smaller than $\pi$rad. The lower holder half shown in fig 5 thereby forms a grip for holding the housing, whilst the CD single can be taken out of the lower holder half and placed therein with the hand not holding said grip.

Referring to figs 5 and 6, strips 29 and 30 are placed on the upper main surface of the upper holder half, said strips having a certain width, and a length greater than the width of the upper holder half as such. Said strips 29 and 30 on the upper main surface of the upper holder half define a space 31 for printed information, for example a wrapper, which space 31, as a result of the height of the strips 29 and 30, is protected from damage due to for example shifting and scratching.

Further advantages of the embodiment described are as follows.

The rectangular configuration, for example 1 : 1.5 - 1 : 2, offers an enlarged presentation space (31), whilst still as little space as possible is occupied and as little material as possible is used. The material may be coloured and does not have to be transparent. Automatic manipulation is possible, also on account of the extra handling function of the opening 12 (fig 1). The other function of the opening 12 is to make it possible to check the contents of the housing in sealed condition. In addition, the housing offers a good protection for the CD single. The housing can be opened with one hand, by pushing the one holder half away from the other holder half with the thumb, as it were.

Now the sealing means will be further explained. Sealing can be achieved by means of a paper cover or wrapper, which may be provided with information about the product and which may be glued on the housing, or by means of a plastic sticker. The sealing may be provided in two places, namely on the two sides 23 and 7 of the upper (fig 5) and the lower (fig 1) holder half, respectively, whereby a dividing line having a vee butt joint may be provided, or on the side 21 and the rib 25 of the upper holder half, and in both cases on at least part of the outside main surfaces of the holder halves, of course. The paper cover or plastic sticker may be provided with a tear line, in the former case related to the dividing line or vee butt joint, for example, and in the latter case to the dividing line which is defined by the rib 25 and the outside main surface of the lower holder half of fig 1.

## Claims

1. Housing for disc-shaped registration mediums, said housing comprising a holder with two holder halves which are movable relative to each other, and a carrier for accomodating a registration disc, characterized in that the holder halves are pivotally connected in parallel planes relative to each other, and that the carrier is formed by a main surface of one of the holder halves.

2. Housing according to claim 1, said housing having a substantially rectangular shape, characterized in that the holder halves are connected together halfway up corresponding sides, with a pivot point spaced therefrom.

3. Housing according to claims 1 or 2, characterized in that said main surface is provided with an upright circular rib intended for accommodating a circular registration disc.

4. Housing according to claim 3, characterized in that the circular rib is interrupted along a certain length of arc, at a spot halfway up the side of the holder half which is located opposite the side having the pin joint.

5. Housing according to claims 3 or 4, characterized in that said main surface is provided with a circular opening concentric with the circular rib, said circular opening having a wider diameter than the circular opening of said circular registration disc.

6. Housing according to any one of the preceding claims, characterized in that the holder halves are provided with a snap.

7. Housing according to claim 6 and any one of the claims 2 - 5, characterized in that the holder half functioning as a carrier has a side, shaped like the arc of a circle, opposite its side having the pin joint, said side being provided with at least one protrusion or recess, and that the other holder half has a straigth side opposite its side having the pin joint, and is provided near that spot with an internal upright circular arc rib, which is provided with at least one recess or protrusion co-operating with said protrusion or said recess.

8. Housing according to any one of the claims 2 - 7, characterized in that the one holder half forms a stop for the other holder half, such that the pivoting distance is limited to a distance smaller than $\pi$ rad.

9. Housing according to any one of the claims 2 - 8, characterized in that one of the holder halves has a stop for the other holder half in the closed position of the housing.

10. Housing according to claims 8 or 9, characterized in that the holder half having the circular arc rib is provided at its inside main surface with an upright straight rib, at one of the sides of said holder half bounding the side having the circular arc rib and the side having the pin joint.

11. Housing according to any one of the preceding claims, characterized in that the holder half not functioning as a carrier is provided, on opposite sides of its outside main surface, with thickenings having a length longer than the length of said sides.

12. Housing according to claim 10, characterized in that the side of the holder half having the upright straight rib, which is located opposite said rib, provides sealing means in combination with the corresponding side of the other holder half.

FIG.1.

FIG.2.

EP 0 344 829 A2

FIG.3.

FIG.4.

FIG.7.

FIG. 5.

FIG. 6.